Europäisches Patentamt

European Patent Office

Office européen des brevets

(19)

(11) Veröffentlichungsnummer : **0 013 015**
**B1**

(12) **EUROPÄISCHE PATENTSCHRIFT**

(45) Veröffentlichungstag der Patentschrift :
**11.05.83**

(51) Int. Cl.³ : **G 03 B 15/03**

(21) Anmeldenummer : **79105311.9**

(22) Anmeldetag : **21.12.79**

(54) **Elektronenblitzgerät-Adapter-Kamera-Kombination.**

(30) Priorität : **23.12.78 DE 2856092**

(43) Veröffentlichungstag der Anmeldung :
**09.07.80 Patentblatt 80/14**

(45) Bekanntmachung des Hinweises auf die Patenter-,
teilung : **11.05.83 Patentblatt 83/19**

(84) Benannte Vertragsstaaten :
**CH DE FR GB IT NL**

(56) Entgegenhaltungen :
**US A 3 750 550**
**US A 4 025 933**
**US A 4 095 242**
**US A 4 095 245**

(73) Patentinhaber : **METZ Apparatewerke Inh. Paul Metz**
**Ritterstrasse 5 Postfach 84**
**D-8510 Fürth 2 (DE)**

**ROBERT BOSCH GMBH**
**Postfach 50**
**D-7000 Stuttgart 1 (DE)**

(72) Erfinder : **Dietrich, Rolf, Dipl.-Ing.**
**Breckenheimer Strasse 20**
**D-6238 Hofheim (DE)**
Erfinder : **Häfner, Heinz**
**Emskirchner Strasse 22**
**D-8500 Nürnberg (DE)**
Erfinder : **Pecher, Wolfgang, Ing.-grad.**
**John-F.-Kennedy-Ring 20**
**D-8550 Forchheim (DE)**

Elektronenblitzgerät-Adapter-Kamera-Kombination

Die Erfindung betrifft eine Elektronenblitzgerät-Adapter-Kamera-Kombination, bei der das Blitzgerät mit einer Kamera durch Aufstecken einer Verbindungsvorrichtung (Adapter) auf einen an der Kamera befindlichen Steckschuh verbindbar ist.

Ein Elektronenblitzgerät dient zum Beleuchten von Scenen, die mit einer fotografischen Kamera aufgenommen werden sollen. Dabei wird das Blitzgerät über eine Verbindungsvorrichtung mit der Kamera verbunden, um den richtigen Funktionsablauf zwischen Kamera und Blitzgerät zu ermöglichen, zum Beispiel, um die Abstrahlung des Blitzlichtes mit der Öffnung des Kameraverschlusses zu synchronisieren.

Bei bekannten Blitzgeräten besteht die Verbindungsvorrichtung zum Beispiel aus einem am Blitzgerät fest montierten Steckfuß, der auf einen an der Kamera befindlichen Steckschuh aufschiebbar ist. Diese Verbindungsvorrichtung ermöglicht eine zweipolige elektrische Verbindung, die eine über den sogenannten Massekontakt und die andere über den Synchronkontakt. Die Steckfüße und Steckschuhe sind genormt, so daß die mit solchen Steckfüßen ausgerüsteten Elektronenblitzgeräte mit jeder Kamera verbindbar sind, die einen genormten Steckschuh besitzt.

Inzwischen gibt es Kameras, deren Funktionsbereich in Verbindung mit Elektronenblitzgeräten über die Synchronisation mit dem Kameraverschluß hinaus erweitert worden ist. Zu diesen Erweiterungen gehören zum Beispiel die Anzeige der Blitzbereitschaft im Kamerasucher, die automatische Umschaltung der Kameraverschlußzeit auf den für Blitzbetrieb notwendigen Wert durch ein Signal aus dem Blitzgerät oder die Aktivierung der Blitzbegrenzungseinrichtung durch einen Steuerimpuls, den das Belichtungsmeßsystem der Kamera an das Blitzgerät liefert. Hierfür sind zusätzliche elektrische Schaltkreise im Blitzgerät und in der Kamera erforderlich, die über zusätzliche Kontakte in den Verbindungsvorrichtungen miteinander verbunden werden müssen.

Diese zusätzlichen Erweiterungen weichen bei verschiedenen Kameratypen voneinander ab, so daß die speziell ausgerüsteten Elektronenblitzgeräte jeweils nur für die zugehörigen Kameras verwendbar sind.

Aus der US-PS 4 095 242 sind zwei Anpassungs-Adapter bekannt, wobei der eine ein Blitzgerät, das zwei Signale an einer Anschlußklemme abgibt, mit einer Kamera verbindet, die zwei getrennte Anschlußklemmen für die beiden Signale hat, während der andere Adapter ein Blitzgerät, das zwei Signale an zwei getrennten Anschlußklemmen abgibt, mit einer Kamera verbindet, die für beide Signale nur eine Anschlußklemme hat. Diese bekannten Adapter sind nur für die zwei erwähnten Fälle verwendbar und ändern nichts an der Tatsache, daß die speziell ausgerüsteten Elektronenblitzgeräte jeweils nur mit den zugehörigen Kameras verbindbar sind.

Hier will die Erfindung Abhilfe schaffen. Die Erfindung, wie sie in den Ansprüchen gekennzeichnet ist, hat die Aufgabe, ein Elektronenblitzgerät so auszugestalten, daß es für eine Vielzahl von unterschiedlichen Kameratypen verwendbar ist, und Verbindungsvorrichtungen zu schaffen, die auf einfache Weise die Verbindung zwischen einem solchen Elektronenblitzgerät und jedem dieser Verschiedenen Kameratypen in beliebigem Wechsel ermöglichen.

Die durch die Erfindung erreichten Vorteile sind im wesentlichen darin zu sehen, daß ein erfindungsgemäßes Elektronenblitzgerät für eine Vielzahl von Spezialkameras verwendbar ist. Es muß lediglich die zu der jeweiligen Kamera gehörende Verbindungsvorrichtung gewählt werden, um das Blitzgerät anschließen zu können. Dadurch ergeben sich für den Blitzgerätehersteller größere Serien vom gleichen Blitzgerätetyp und für den Handel eine geringere Lagerhaltung.

Im folgenden wird die Erfindung anhand von lediglich einen Ausführungsweg darstellenden Zeichnungen näher erläutert.

Es zeigen

Figur 1 eine schematische Darstellung des Erfindungsgegenstandes und die

Figuren 2 und 3 Einzelheiten eines Kontaktsockels beziehungsweise einer Verbindungsvorrichtung gemäß der Erfindung.

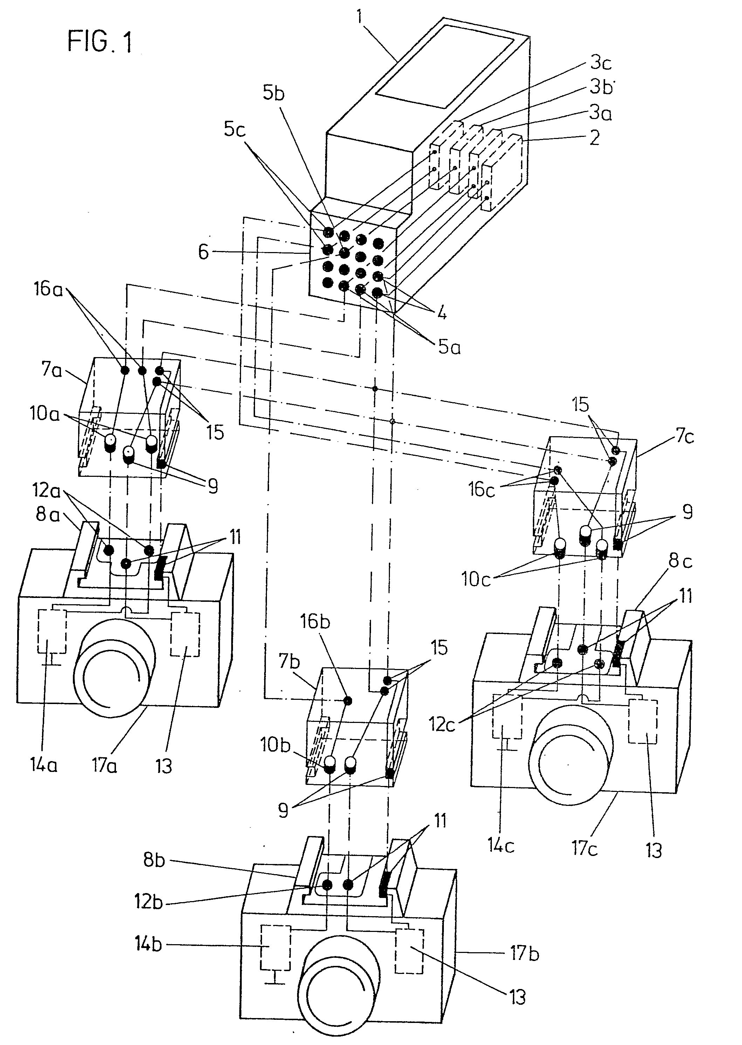

In Figur 1 ist ein Elektronenblitzgerät 1 dargestellt sowie drei unterschiedliche Kameras 17a, 17b, 17c mit je einem Steckschuh 8a, 8b, 8c, dessen Kontaktelemente 11 (Massekontakt und Synchronkontakt) mit einem in allen Kameras 17a, 17b, 17c gleichermaßen vorhandenen Schalter 13 verbunden sind, der mit dem Kameraverschluß gekoppelt ist, während die Kontaktelemente 12a, 12b, 12c, die sich bei jeder Kamera 17a, 17b, 17c an einer anderen Stelle des Steckschuhes 8a, 8b, 8c befinden, mit unterschiedlich ausgestalteten Schaltkreisen 14a, 14b, 14c verbunden sind.

Das Elektronenblitzgerät 1 enthält außer einem für alle Kameratypen gemeinsam benötigten Schaltkreis 2 für die Zündung der Blitzröhre weitere Schaltkreise 3a, 3b, 3c, die für die verschiedenen Kameras 17a, 17b, 17c unterschiedliche elektrische Funktionen zu erfüllen haben und mit diesen Kameras 17a, 17b, 17c zugeordneten Kontaktelementen 5a, 5b, 5c eines am Blitzgerät 1 befestigten Kontaktsockels 6 verbunden sind, während der gemeinsam benötigte Schaltkreis 2 mit Kontaktelementen 4 des Kontaktsockels 6 in Verbindung steht.

An diesem Kontaktsockel 6 ist für jede der unterschiedlichen Kameras 17a, 17b, 17c eine besondere Verbindungsvorrichtung 7a, 7b, 7c anschließbar, die in den Steckschuh 8a, 8b, 8c der zugehörigen Kamera 17a, 17b, 17c einschiebbar ist. Auf der in den Steckschuh 8a, 8b, 8c eingreifenden Seite jeder Verbindungsvorrichtung 7a, 7b, 7c sind Kontaktelemente 9, 10a, 10b, 10c angebracht, deren Lage der Anordnung der Kontaktelemente 11, 12a, 12b, 12c in dem Steckschuh 8a, 8b, 8c der jeweiligen Kamera 17a, 17b, 17c entspricht und die mit in den Kontaktsockel 6 eingreifenden Kontaktelementen 15, 16a, 16b, 16c verbunden sind, deren Lage der Anordnung der der jeweiligen Kamera 17a, 17b, 17c zugeordneten Kontaktelementen 4, 5a, 5b, 5c entspricht.

Die strichpunktierten Linien deuten an, welche Kontaktelemente gemäß der Erfindung miteinander verbindbar sind.

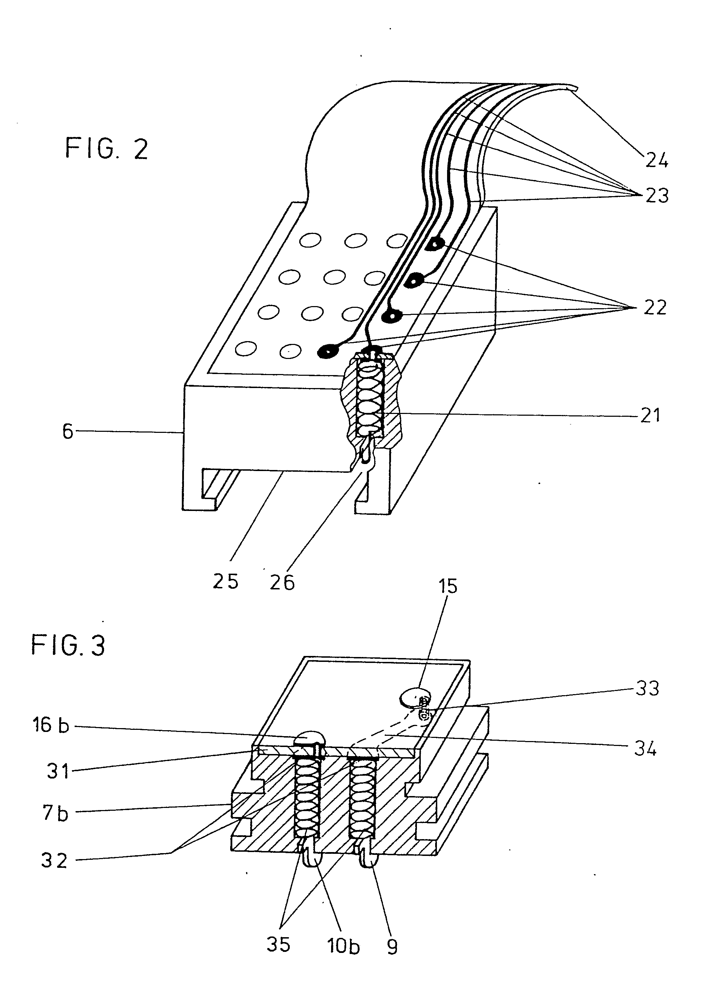

In figur 2 ist ein Kontaktsockel 6 dargestellt, dessen untere Abdeckung 25 Schlitze 26 aufweist, hinter denen sich je eine zylindrische Schraubendruckfeder 21 befindet, an deren unterem Ende etwa die Hälfte der letzten Windung rechtwinklig abgebogen ist und durch den jeweiligen Schlitz 26 hindurchragt, während das obere Ende auf einem als Kontaktfläche 22 ausgebildeten Ende einer Leiterbahn 23 einer vorzugsweise flexiblen gedruckten Leiterplatte 24 aufliegt, dessen anderes Ende mit dem zugeordneten blitzgeräteseitigen Schaltkreis 2, 3a, 3b, 3c verbunden ist.

In Figur 3 ist eine Verbindungsvorrichtung 7a, 7b, 7c dargestellt. Die in den Kontaktsockel 6 eingreifenden Kontaktelemente 15, 16a, 16b, 16c sind als Kontaktflächen ausgebildet und befinden sich auf der einen Seite einer sogenannten gedruckten Leiterplatte 31. Sie sind über durchkontaktierte Bohrungen 33 und gegebenenfalls über Leiterbahnen 34 mit Kontaktflächen 32 auf der anderen Seite der Leiterplatte 31 verbunden, wobei zwischen diesen Kontaktflächen 32 einerseits und den in den Steckschuh 8a, 8b, 8c eingreifenden Kontaktelementen 9, 10a, 10b, 10c andererseits zylindrische Schraubendruckfedern 35 angeordnet sind.

**Ansprüche**

1. Elektronenblitzgerät-Adapter-Kamera-Kombination, bei der das Blitzgerät mit einer Kamera durch Aufstecken einer Verbindungsvorrichtung (Adapter) auf einen an der Kamera befindlichen Steckschuh verbindbar ist, dadurch gekennzeichnet, daß für unterschiedliche Kameras (17a, 17b, 17c) blitzgeräteseitig vorgesehene unterschiedliche elektrische Schaltkreise (3a, 3b, 3c) mit vorbestimmten, den unterschiedlichen Kameras (17a, 17b, 17c) zugeordneten Kontaktelementen (5a, 5b, 5c) eines Kontaktsockels (6) verbunden sind, an den für jede der unterschiedlichen Kameras (17a, 17b, 17c) eine besondere Verbindungsvorrichtung (7a, 7b, 7c) anschließbar ist, auf deren in den Steckschuh (8a, 8b, 8c) der jeweiligen Kamera (17a, 17b, 17c) eingreifenden Seite Kontaktelemente (9, 10a, 10b, 10c) vorhanden sind, deren Lage der Anordnung der Kontaktelemente (11, 12a, 12b, 12c) in dem Steckschuh (8a, 8b, 8c) der jeweiligen Kamera (17a, 17b, 17c) entspricht und die unmittelbar oder mittelbar mit in den Kontaktsockel (6) eingreifenden Kontaktelementen (15, 16a, 16b, 16c) verbunden sind, deren Lage der Anordnung der der jeweiligen Kamera (17a, 17b, 17c) zugeordneten Kontaktelemente (4, 5a, 5b, 5c) des Kontaktsockels (6) entspricht.

2. Elektronenblitzgerät-Adapter-Kamera-Kombination nach Anspruch 1, dadurch gekennzeichnet, daß die Kontaktelemente (4, 5a, 5b, 5c) des Kontaktsockels (6) als in sich federnde Kontaktelemente ausgebildet sind.

3. Elektronenblitzgerät-Adapter-Kamera-Kombination nach Anspruch 2, dadurch gekennzeichnet, daß die Kontaktelemente (4, 5a, 5b, 5c) aus je einer zylindrischen Schraubenfeder (21) bestehen, an deren unterem Ende etwa die Hälfte der letzten Windung rechtwinklig abgebogen ist und durch einen in der steckfußseitigen Abdeckung (25) des Kontaktsockels (6) ausgebildeten Schlitz (26) hindurchragt, während das andere Ende der Schraubenfeder (21) mit dem zugeordneten blitzgeräteseitigen Schaltkreis (2, 3a, 3b, 3c) verbunden ist.

4. Elektronenblitzgerät-Adapter-Kamera-Kombination nach einem der Ansprüche 1 bis 3, dadurch gekennzeichnet, daß die leitenden Verbindungen zwischen den Kontaktelementen (4, 5a, 5b, 5c) des Kontaktsockels (6) und den zugeordneten Schaltkreisen (2, 3a, 3b, 3c) über Leiterbahnen (23) einer vorzugsweise flexiblen Leiterplatte (24) verlaufen.

5. Elektronenblitzgerät-Adapter-Kamera-Kombination nach Anspruch 4, dadurch gekennzeichnet, daß die Leiterbahnen (23) an beiden Enden als Kontaktflächen (22) ausgebildet sind, auf denen an dem einen Ende der Leiterbahnen (23) die Kontaktelemente (4, 5a, 5b, 5c) des Kontaktsockels (6) und/oder an dem anderen Ende weitere, vorzugsweise federnde Kontaktelemente aufliegen, die mit den Schaltkreisen (2, 3a, 3b, 3c) verbunden sind.

6. Elektronenblitzgerät-Adapter-Kamera-Kombination nach einem der Ansprüche 4 und 5, dadurch gekennzeichnet, daß die Schaltkreise (2, 3a, 3b, 3c) unmittelbar auf der Leiterplatte (24) untergebracht sind.

7. Elektronenblitzgerät-Adapter-Kamera-Kombination nach einem der Ansprüche 1 bis 6, dadurch gekennzeichnet, daß der Kontaktsockel (6) am oder im Blitzgerätegehäuse oder an einem bewegbaren, vorzugsweise schwenkbaren Teil des Blitzgerätes (1) angebracht oder an dem einen Ende eines flexiblen Kabels angeschlossen ist, dessen anderes Ende fest oder über eine Kupplungsvorrichtung lösbar mit dem Blitzgerät (1) verbunden ist.

8. Elektronenblitzgerät-Adapter-Kamera-Kombination nach einem der Ansprüche 1 bis 7, dadurch gekennzeichnet, daß die in den Kontaktsockel (6) eingreifenden Kontaktelemente (15, 16a, 16b, 16c) der Verbindungsvorrichtung (7a, 7b, 7c) als Kontaktflächen ausgebildet sind, die auf der einen Seite einer isolierenden Platte (31) aufgebracht und mit auf der anderen Seite dieser Platte (31) befindlichen Kontaktflächen (32) leitend verbunden sind, die ihrerseits mit den Kontaktelementen (9, 10a, 10b, 10c) auf der in den Steckschuh (8a, 8b, 8c) eingreifenden Seite der Verbindungsvorrichtung (7a, 7b, 7c) verbunden sind.

9. Elektronenblitzgerät-Adapter-Kamera-Kombination nach Anspruch 8, dadurch gekennzeichnet, daß die isolierende Platte (31) eine sogenannte gedruckte Leiterplatte ist und daß die leitenden Verbindungen der Kontaktflächen (15, 16a, 16b, 16c) der einen Seite mit denen (32) auf der anderen Seite der Platte (31) über durchkontaktierte Bohrungen (33) und gegebenenfalls über Leiterbahnen (34) verlaufen.

10. Elektronenblitzgerät-Adapter-Kamera-Kombination nach einem der Ansprüche 1 bis 9, dadurch gekennzeichnet, daß die Verbindungen der in den Kontaktsockel (6) eingreifenden Kontaktelemente (15, 16a, 16b, 16c) der Verbindungsvorrichtung (7a, 7b, 7c) mit den Kontaktelementen (9, 10a, 10b, 10c) auf der in den Steckschuh (8a, 8b, 8c) eingreifenden Seite über Adern eines flexiblen Kabels verlaufen.

11. Elektronenblitzgerät-Adapter-Kamera-Kombination nach einem der Ansprüche 1 bis 7, dadurch gekennzeichnet, daß die Verbindungsvorrichtung als kompakter Steckfuß (7a, 7b, 7c) ausgebildet ist, wobei die in den Kontaktsockel (6) eingreifenden Kontaktelemente (15, 16a, 16b, 16c) an einer Seite des Steckfußes (7a, 7b, 7c) angebracht sind, vorzugsweise an derjenigen Seite, die der in den Steckschuh (8a, 8b, 8c) eingreifenden Seite gegenüberliegt.

12. Elektronenblitzgerät-Adapter-Kamera-Kombination nach Anspruch 11, dadurch gekennzeichnet, daß jedes der in den Kontaktsockel (6) eingreifenden Kontaktelemente (15, 16a, 16b, 16c) der Verbindungsvorrichtung zusammen mit dem zugehörigen Kontaktelement (9, 10a, 10b, 10c) auf der in den Steckschuh (8a, 8b, 8c) eingreifenden Seite als einstückiges, vorzugsweise in sich federndes Kontaktelement ausgebildet ist.

13. Elektronenblitzgerät-Adapter-Kamera-Kombination nach einem der Ansprüche 8 und 9, dadurch gekennzeichnet, daß die Verbindungsvorrichtung als kompakter Steckfuß (7a, 7b, 7c) ausgebildet ist, wobei die isolierende Platte (31) an einer Seite des Steckfußes (7a, 7b, 7c) angebracht ist, vorzugsweise an derjenigen Seite, die der in den Steckschuh (8a, 8b, 8c) eingreifenden Seite gegenüberliegt.

14. Elektronenblitzgerät-Adapter-Kamera-Kombination nach Anspruch 13, dadurch gekennzeichnet, daß die Verbindungen zwischen den Kontaktflächen (32) auf der der Kamera (17a, 17b, 17c) zugewandten Seite der isolierenden Platte (31) der Verbindungsvorrichtung und den Kontaktelementen (11, 12a, 12b, 12c) im Steckschuh (8a, 8b, 8c) über in sich federnde Kontaktelemente oder über die Kontaktelemente (11, 12a, 12b, 12c) im Steckschuh (8a, 8b, 8c) berührende Kontaktstücke (9, 10b) verlaufen, die unter dem Druck einer Feder (35), vorzugsweise einer Schraubenfeder, stehen, die zwischen jedem Kontaktstück (9, 10b) und der zugehörigen Kontaktfläche (32) angeordnet ist.

**Claims**

1. Combination of electronic flash apparatus, adapter and camera, in which the flash apparatus can be connected to a camera by mounting a connecting device (adapter) on an accessory shoe disposed on the camera, characterised in that, for different cameras (17a, 17b, 17c) the flash apparatus is provided with different electrical circuits (3a, 3b, 3c) connected to predetermined contact elements (5a, 5b, 5c), corresponding to the different cameras (17a, 17b, 17c), of a contact socket (6), to which a special connecting device (7a, 7b, 7c) can be connected for each of the different cameras (17a, 17b, 17c), the side of the connecting device (7a, 7b, 7c) which engages in the accessory shoe (8a, 8b, 8c) of the respective camera (17a, 17b, 17c) being provided with contact elements (9, 10a, 10b, 10c), the positions of which correspond to the arrangement of the contact elements (11, 12a, 12b, 12c) in the accessory shoe (8a, 8b, 8c) of the respective camera (17a, 17b, 17c) and which are connected directly or indirectly to contact elements (15, 16a, 16b, 16c) which engage in the contact socket (6) and whose positions correspond to the arrangement of the contact elements (4, 5a, 5b, 5c), of the contact socket (6) that are associated with the respective camera (17a, 17b, 17c).

2. Combination of electronic flash apparatus, adapter and camera according to claim 1, characterised in that the contact elements (4, 5a, 5b, 5c) of the contact socket (6) are formed as intrinsically resilient contact elements.

3. Combination of electronic flash apparatus, adapter and camera according to claim 2, characterised in that each contact element (4, 5a, 5b, 5c) consists of a cylindrical spiral spring (21), at the lower end of which approximately half the final turn is bent at a right angle and projects through a slit (26) formed in the cover (25) of the contact socket (6) towards the connecting foot, while the other end of the spiral spring (21) is connected to the associated circuit (2, 3a, 3b, 3c) inside the flash apparatus.

4. Combination of electronic flash apparatus, adapter and camera according to one of claims 1 to 3, characterised in that the conductive connections between the contact elements (4, 5a, 5b, 5c) of the contact socket (6) and the associated circuits (2, 3a, 3b, 3c) extend by way of conductor tracks (23) of a preferably flexible circuit board (24).

5. Combination of electronic flash apparatus, adapter and camera according to claim 4, characterised in that the conductor tracks (23) are formed at both ends as contact surfaces (22) bearing at one end of the conductor tracks (23) the contact elements (4, 5a, 5b, 5c) of the contact socket (6) and/or at the other end further, preferably resilient contact elements which are connected to the said circuits (2, 3a, 3b, 3c).

6. Combination of electronic flash apparatus, adapter and camera according to one of claims 4 and 5, characterised in that the circuits (2, 3a, 3b, 3c) are disposed directly on the circuit board (24).

7. Combination of electronic flash apparatus, adapter and camera according to one of claims 1 to 6, characterised in that the contact socket (6) is arranged on or in the flash apparatus housing or on a movable, preferably pivotable part of the flash apparatus (1) or is connected to one end of a flexible cable, the other end of which is connected rigidly or detachably by way of a coupling device to the flash apparatus (1).

8. Combination of electronic flash apparatus, adapter and camera according to one of claims 1 to 7, characterised in that the contact elements (15, 16a, 16b, 16c) of the connecting device (7a, 7b, 7c) which engage in the contact socket (6) are formed as contact surfaces which are mounted on one side of an insulating board (31) and are conductively connected to contact surfaces (12) which are disposed on the other side of this board (31) and which are connected to the contact elements (9, 10a, 10b, 10c) on the side of the connecting device (7a, 7b, 7c) engaging in the accessory shoe (8a, 8b, 8c).

9. Combination of electronic flash apparatus, adapter and camera according to claim 8, characterised in that the insulating board (31) is a so-called printed circuit board and that the conducting connections between the contact surfaces (15, 16a, 16b, 16c) of one side and those (32) on the other side of the board (31) extend along feedthrough bores (33) and possibly via conductor tracks (34).

10. Combination of electronic flash apparatus, adapter and camera according to one of claims 1 to 9, characterised in that the connections between the contact elements (15, 16a, 16b, 16c) of the connecting device (7a, 7b, 7c) which engage in the contact socket (6) and the contact elements (9, 10a, 10b, 10c) on the side engaging in the accessory shoe (8a, 8b, 8c) extend along cores of a flexible cable.

11. Combination of electronic flash apparatus, adapter and camera according to one of claims 1 to 7, characterised in that the connecting device is formed as a compact connecting foot (7a, 7b, 7c), the contact elements (15, 16a, 16b, 16c) which engage in the contact socket (6) being disposed on one side of the connecting foot (7a, 7b, 7c), preferably on the side opposite that engaging in the accessory shoe (8a, 8b, 8c).

12. Combination of electronic flash apparatus, adapter and camera according to claim 11, characterised in that each of the contact elements (15, 16a, 16b, 16c) of the connecting device which engage in the contact socket (6), together with the associated contact element (9, 10a, 10b, 10c) on the side engaging in the accessory shoe (8a, 8b, 8c), is formed as a one-part, preferably intrinsically resilient contact element.

13. Combination of electronic flash apparatus, adapter and camera according to one of claims 8 and 9, characterised in that the connecting device is formed as a compact connecting foot (7a, 7b, 7c), the insulating board (31) being mounted on one side of the connecting foot (7a, 7b, 7c), preferably on the side opposite that engaging in the accessory shoe (8a, 8b, 8c).

14. Combination of electronic flash apparatus, adapter and camera according to claim 13, characterised in that the connections between the contact surfaces (32) on the side, facing the camera (17a, 17b, 17c), of the insulating board (31) of the connecting device and the contact elements (11, 12a, 12b, 12c) in the accessory shoe (8a, 8b, 8c) extend via intrinsically resilient contact elements or via contact parts (9, 10b) contacting the contact elements (11, 12a, 12b, 12c) in the accessory shoe (8a, 8b, 8c), which contact parts (9, 10b), are subject to the pressure of a spring (35), preferably a spiral spring, which is arranged between each contact part (9, 10b) and the associated contact surface (32).

## Revendications

1. Ensemble flash électronique-adaptateur-appareil photographique, dans lequel le flash peut être relié à un appareil par insertion d'un adaptateur dans une griffe de fixation située sur l'appareil, ledit ensemble étant caractérisé en ce que des circuits électriques différents (3a, 3b, 3c), prévus dans le flash pour des appareils différents (17a, 17b, 17c), sont reliés à des éléments de contact (5a, 5b, 5c) prédéterminés d'un socle 6 et affectés aux divers appareils (17a, 17b, 17c) ledit socle pouvant être relié à un adaptateur (7a, 7b, 7c) particulier pour chaque appareil différent (17a, 17b, 17c) et dont la face s'engageant dans la griffe de fixation (8a, 8b, 8c) de l'appareil considéré (17a, 17b, 17c) comporte des éléments de contact (9, 10a, 10b, 10c) dont la position correspond à celle des éléments de contact (11, 12a, 12b, 12c) dans la griffe de fixation (8a, 8b, 8c) de l'appareil considéré (17a, 17b, 17c) et qui sont reliés directement ou indirectement à des éléments de contact (15, 16a, 16b, 16c) s'engageant dans le socle 6 et dont la position correspond à celle des éléments de contact (4, 5a, 5b, 5c) du socle 6, affectés à l'appareil considéré (17a, 17b, 17c).

2. Ensemble flash électronique-adaptateur-appareil photographique selon revendication 1, caractérisé en ce que les éléments de contact (4, 5a, 5b, 5c) du socle (6) sont réalisés sous forme d'éléments de contact élastiques.

3. Ensemble flash électronique-adaptateur-appareil photographique selon revendication 2, caractérisé en ce que les éléments de contact (4, 5a, 5b, 5c) sont constitués chacun par un ressort à boudin cylindrique (21) à l'extrémité inférieure duquel la moitié environ de la dernière spire est repliée à angle droit et pénètre dans une fente (26) réalisée sur la partie (25) du socle (6) du côté de la griffe de fixation, tandis que l'autre extrémité du ressort à boudin (21) est reliée au circuit (2, 3a, 3b, 3c) correspondant du flash.

4. Ensemble flash électronique-adaptateur-appareil photographique selon une quelconque des revendications 1 à 3, caractérisé en ce que les connexions entre les éléments de contact (4, 5a, 5b, 5c) du socle (6) et les circuits correspondants (2, 3a, 3b, 3c) passent par des rubans conducteurs (23) d'une carte imprimée (24) de préférence souple.

5. Ensemble flash électronique-adaptateur-appareil photographique selon revendication 4, caractérisé en ce que les deux extrémités des rubans conducteurs (23) sont réalisées sous forme de surfaces de contact (22) sur lesquelles s'appliquent, à une extrémité des rubans conducteurs (23), les éléments de contact (4, 5a, 5b, 5c) du socle (6) et/ou à l'autre extrémité, d'autres éléments de contact, de préférence élastiques, reliés aux circuits (2, 3a, 3b, 3c).

6. Ensemble flash-électronique-adaptateur-appareil photographique selon une des revendications 4 et 5, caractérisé en ce que les circuits (2, 3a, 3b, 3c) sont disposés directement sur la carte imprimée (24).

7. Ensemble flash électronique-adaptateur-appareil photographique selon une quelconque des revendications 1 à 6, caractérisé en ce que le socle (6) est disposé sur ou dans le boîtier du flash, ou sur une partie mobile, et de préférence pivotante du flash (1), ou relié à une extrémité d'un câble souple, dont l'autre extrémité est reliée à demeure ou par un connecteur au flash (1).

8. Ensemble flash électronique-adaptateur-appareil photographique selon une quelconque des revendications 1 à 7, caractérisé en ce que les éléments de contact (15, 16a, 16b, 16c) de l'adaptateur (7a, 7b, 7c) s'engageant dans le socle (6) sont réalisés sous forme de surfaces de contact, disposées sur une face d'une carte isolante (31) et connectées à des surfaces de contact (32) situées sur l'autre face de ladite carte (31) et reliées aux éléments de contact (9, 10a, 10b, 10c) sur le côté de l'adaptateur (7a, 7b, 7c) s'engageant dans la griffe de fixation (8a, 8b, 8c).

9. Ensemble flash électronique-adaptateur-appareil photographique selon revendication 8, caractérisé en ce que la carte isolante (31) est une carte imprimée ; et les connexions entre les surfaces de contact (15, 16a, 16b, 16c) d'une face et celles (32) de l'autre face de la carte (31) sont établies par des trous métallisés (33) et le cas échéant des rubans conducteurs (34).

10. Ensemble flash électronique-adaptateur-appareil photographique selon une quelconque des revendications 1 à 9, caractérisé en ce que les connexions entre les éléments de contact (15, 16a, 16b, 16c) de l'adaptateur (7a, 7b, 7c) s'engageant dans le socle (6) et les éléments de contact (9, 10a, 10b, 10c) sur le côté s'engageant dans la griffe de fixation (8a, 8b, 8c) sont établies par des conducteurs d'un câble souple.

11. Ensemble flash électronique-adaptateur-appareil photographique selon une quelconque des revendications 1 à 7, caractérisé en ce que l'adaptateur est réalisé sous forme d'un sabot compact (7a, 7b, 7c), les éléments de contact (15, 16a, 16b, 16c) qui s'engagent dans le socle (6) étant disposés sur un côté du sabot (7a, 7b, 7c), et de préférence sur le côté opposé à celui s'engageant dans la griffe de fixation (8a, 8b, 8c).

12. Ensemble flash électronique-adaptateur-appareil photographique selon revendication 11, caractérisé en ce que chaque élément de contact (15, 16a, 16b, 16c) de l'adaptateur s'engageant dans le socle (6) est réalisé, avec l'élément de contact (9, 10a, 10b, 10c) correspondant sur le côté qui s'engage dans la griffe de fixation (8a, 8b, 8c), sous forme d'un élément de contact en une seule pièce, de préférence élastique.

13. Ensemble flash électronique-adaptateur-appareil photographique selon une des revendications 8 et 9, caractérisé en ce que l'adaptateur est réalisé sous forme d'un sabot compact (7a, 7b, 7c), la carte isolante (31) étant disposée sur un côté du sabot (7a, 7b, 7c), et de préférence sur le côté opposé à celui qui s'engage dans la griffe de fixation (8a, 8b, 8c).

14. Ensemble flash électronique-adaptateur-appareil photographique selon revendication 13, caractérisé en ce que les connexions entre les surfaces de contact (32) sur la face de la carte isolante (31) de l'adaptateur en regard de l'appareil (17a, 17b, 17c) et les éléments de contact (11, 12a, 12b, 12c) dans la griffe de fixation (8a, 8b, 8c) sont établies par des éléments de contact élastiques ou par les pièces de contact (9, 10b) s'appliquant sur les éléments de contact (11, 12a, 12b, 12c) dans la griffe de fixation (8a, 8b, 8c) et soumises à la pression d'un ressort (35), et de préférence un ressort à boudin disposé entre chaque pièce de contact (9, 10b) et la surface de contact correspondante (32).

FIG. 1

0 013 015

FIG. 2

6

— 24

— 23

— 22

— 21

25  26

FIG. 3

15

— 33

16 b

31

— 34

7 b

32

35  10b  9